# EUROPEAN PATENT SPECIFICATION

(11) **EP 2 174 997 B1**
(45) Date of publication and mention of the grant of the patent: **08.02.2012**
(21) Application number: 09172420.3
(22) Date of filing: 07.10.2009
(51) Int. Cl.: C09D 11/00

(54) **Printing method by ink jet recording**
Druckverfahren durch Tintenstrahlaufzeichnung
Procédé d'impression par enregistrement par jet d'encre

(30) Priority: 08.10.2008 JP 2008261421
(43) Date of publication of application: 14.04.2010
(73) Proprietor: Seiko Epson Corporation, Tokyo 163-0811 (JP)
(72) Inventor: Ohta, Hitoshi, Nagano 392-8502 (JP)
(74) Representative: HOFFMANN EITLE

(56) References cited:
- EP-A- 1 548 072
- EP-A- 1 561 788
- EP-A- 1 811 002
- EP-A- 1 942 160
- US-A1- 2005 282 930

## Description

### BACKGROUND

### 1. Technical Field

The present invention relates to a method for printing by an ink jet recording technique.

### 2. Related Art

Ink-non-absorbent recording media, such as vinyl chloride-based media, are generally printed with solvent-based pigment inks. Solvent-based pigment inks can easily dry and superior in resistance to water. They, however, have problems that an odor or a toxic vapor may be released from the surface of the recording medium because images are formed by vaporizing the solvent to dry. Accordingly, aqueous inks are increasingly used for ink-non-absorbent or ink-low-absorbent recording media in view of safety and environmental protection.

Some patent documents disclose methods for printing an image on an ink-non-absorbent or ink-low-absorbent recording medium by an ink jet recording technique. For example, JP-A-2000-44858 discloses a method for printing on a hydrophobic surface with an ink containing water, a glycol-based solvent, an insoluble coloring agent, a polymer dispersant, a silicone surfactant, a fluorinated surfactant, a water-insoluble graft copolymer binder and N-methylpyrrolidone. JP-A-2005-220352 discloses a polymer colloid-containing aqueous ink jet ink used for printing on nonporous media. The aqueous ink jet ink contains an aqueous liquid vehicle containing a volatile cosolvent having a boiling point of 285°C or less, acid-functionalized polymer colloid particles and a pigment coloring agent.

However, many of the known inks contain solvents having strong odors, and accordingly, the strong odor released during printing and from the printed matter is a problem, particularly in terms of safety. Also, many of the known inks contain solvents having relatively high boiling points. Accordingly, it may take a long time to dry the printed matter. The printing speed cannot be increased in use of such inks.

### SUMMARY

An advantage of some aspects of the invention is that it provides a method for printing an image with an aqueous ink composition on an ink-non-absorbent or ink-low-absorbent recording medium by an ink jet recording technique. The method reduces the odor released during printing and from printed matter, and produces printed matter that can easily dry and includes a high-quality image hardly exhibiting ink bleeding or non-uniform ink density.

The printing method according to an embodiment of the invention includes forming an image by ejecting droplets of an aqueous ink composition onto on an ink-non-absorbent or ink-low-absorbent recording medium by an ink jet recording technique, and drying the aqueous ink composition on the recording medium during and/or after forming the image. The aqueous ink composition contains a water-insoluble coloring agent, a resin component, a silicone surfactant, an acetylene glycol-based surfactant, a pyrrolidone derivative, 1,2-alkyldiol, a polyhydric alcohol, and water.

Preferably, the drying of the aqueous ink composition includes heating the recording medium to a temperature of 40 to 80°C and/or blowing air having a temperature of 40 to 80°C onto the aqueous ink composition on the recording medium.

Preferably, the forming of the image is performed at a print resolution of 360 dpi or more, and the ratio of the nozzle resolution to the print resolution is in the range of 1 to 2.

The aqueous ink composition may have a viscosity of 1.5 to 15 mPa·s at 20°C.

The silicone surfactant content in the aqueous ink composition may be 0.1% to 1.5% by mass.

The acetylene glycol-based surfactant content in the aqueous ink composition may be 0.1% to 1.0% by mass.

In the aqueous ink composition, the pyrrolidone derivative content may be 1.0% to 8.0% by mass, the 1,2-alkyldiol content is 1.0% to 8.0% by mass, and the total content of the pyrrolidone derivative and the 1,2-alkyldiol may be 10.0% by mass or less.

The pyrrolidone derivative may be 2-pyrrolidone.

The 1,2-alkyldiol may include an alkyl group having a carbon number of 4 to 8.

The polyhydric alcohol may be at least one selected from the group consisting of ethylene glycol, diethylene glycol, triethylene glycol, propylene glycol and dipropylene glycol.

### DESCRIPTION OF EXEMPLARY EMBODIMENTS

Preferred embodiments of the invention will now be described in detail.

### 1. Printing method by ink jet recording

A printing method according to an embodiment of the invention includes the first step of forming an image by ejecting droplets of an aqueous ink composition onto an ink-non-absorbent or ink-low-absorbent recording medium by an ink jet recording technique, and the second step of drying the aqueous ink composition on the recording medium at least during the first step and after the first step. The aqueous ink composition contains a water-insoluble coloring agent, a resin component, a silicone surfactant, an acetylene glycol-based surfactant, a pyrrolidone derivative, 1,2-alkyldiol, a polyhydric alcohol, and water.

The aqueous ink composition used in the printing method of an embodiment will first be described.

### 1. 1 Aqueous ink composition

### 1. 1. 1 Coloring agent

The aqueous ink composition contains a water-insoluble coloring agent. Exemplary water-insoluble coloring agents include water-insoluble dyes and pigments, and, preferably, pigments are used. Pigments are insoluble in water or difficult to dissolve in water. In addition, pigments are resistant to light and gases and accordingly resist fading. Consequently, printed matter prepared with an ink composition containing a pigment is highly resistant to water, gases and light, and hence can maintain its quality for a long time.

Any known inorganic pigment, organic pigment or carbon black can be used in the aqueous ink composition. Preferably, a carbon black or an organic pigment is used because they have good coloration and such low specific gravities as to be difficult to sink and deposit when dispersed.

For a black aqueous ink composition, a carbon black is preferably used as the coloring agent. Preferred carbon blacks include: C. I. Pigment Black 7, such as furnace black, lampblack, acetylene black and channel black; and commercially available carbon blacks. Commercially available black carbons include products of Mitsubishi Chemical, such as Nos. 2300 and 900, MCF88, Nos. 20B, 33, 40, 45 and 52, MA7, MA8, MA100, and No. 2200B; products produced by Degussa, such as Color Blacks FW1, FW2, FW2V, FW18, FW200, S150, S160 and S170, Pritex 35, Pritex U, Pritex V, Pritex 140U, and Special Blacks 6, 5, 4A, 4 and 250; and products of Columbia Carbon, such as Conductex SC, Raven 1255, Raven 5750, Raven 5250, Raven 5000, Raven 3500 and Raven 700; products of Cabot, such as Regal 400R, Regal 330R, Regal 660R, Mogul L, Monarch 700, Monarch 800, Monarch 880, Monarch 900, Monarch 1000, Monarch 1100, Monarch 1300, Monarch 1400, and Elftex 12. These carbon blacks are cited as examples, and any other carbon black may be used without limiting the invention. The above carbon blacks may be used singly or in combination. The carbon black content is 0.5% to 20% by mass, preferably 1% to 10% by mass, in the black ink composition.

For color ink aqueous ink compositions, organic pigments are preferably used as the coloring agent. Preferred organic pigments include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, isoindolinone pigments, azomethine pigments, and azo pigments.

More specifically, following organic pigments can be used.

Pigments used for a cyan ink composition include C. I. Pigment Blues 1, 2, 3, 15:3, 15:4, 15:34, 16, 22 and 60; and C. I. Vat Blues 4 and 60. Preferably, at least one pigment selected from among C. I. Pigment Blues 15:3, 15:4 and 60 is used singly or in combination. The pigment content in the cyan ink composition is about 0.5% to 20% by mass, preferably about 1% to 10% by mass.

Pigments used in a magenta ink composition include C. I. Pigment Reds 5, 7, 12, 48(Ca), 48(Mn), 57(Ca), 57:1, 112, 122, 123, 168, 184 and 202, and C. I. Pigment Violet 19. Preferably, at least one pigment selected from the group consisting of C. I. Pigment Reds 122, 202 and 209, and C. I. Pigment Violet 19 is used singly or in combination. The pigment content in the magenta ink composition is about 0.5% to 20% by mass, preferably about 1% to 10% by mass.

Pigments used in a yellow ink composition include C. I. Pigment Yellows 1, 2, 3, 12, 13, 14C, 16, 17, 73, 74, 75, 83, 93, 95, 97, 98, 109, 110, 114, 128, 129, 138, 150, 151, 154, 155, 180 and 185. Preferably, at least one pigment selected from the group consisting of C. I. Pigment Yellows 74, 109, 110, 128 and 138 is used singly or in combination. The pigment content in the yellow ink composition is about 0.5% to 20% by mass, preferably about 1% to 10% by mass.

Pigments used in an orange ink composition include C. I. Pigment Oranges 36 and 43 and their mixtures. The pigment content in the orange ink composition is about 0.5% to 20% by mass, preferably about 1% to 10% by mass.

Pigments used in a green ink composition include C. I. Pigment Greens 7 and 36 and their mixtures. The pigment content in the green ink composition is about 0.5% to 20% by mass, preferably about 1% to 10% by mass.

For use of the pigment in the aqueous ink composition, it is desired that the pigment be held in water in a stably dispersed state. For example, the pigment may be dispersed in water with a resin dispersant such as water-soluble resin and/or water-dispersible resin. The resulting dispersion is herein referred to as resin-dispersed pigment dispersion. The pigment may be dispersed with a water-soluble surfactant and/or a water-dispersible surfactant. The resulting dispersion is herein referred to as surfactant-dispersed pigment dispersion. Alternatively, a hydrophilic functional group may be chemically or physically introduced to the surfaces of the pigment particles so that the pigment can be dispersed or dissolved in water without using a resin dispersant, a surfactant or any other dispersant. Such a surface-treated pigment may be dispersed to prepare a pigment dispersion. Any one of the resin-dispersed pigment dispersion, the surfactant-dispersed pigment dispersion, or the surface-treated pigment dispersion can be used for preparing the aqueous ink composition used in the printing method of an embodiment of the invention. These dispersions may be used in combination.

Examples of the resin dispersant include polyvinyl alcohols, polyvinyl pyrrolidone, polyacrylic acid, acrylate-acrylonitrile copolymer, vinyl acetate-acrylic ester copolymer, acrylic acid -acrylic ester copolymer, styrene-acrylic acid copolymer, styrene-methacrylic acid copolymer, styrene-methacrylic acid-acrylic ester copolymer, styrene-α-methylstyrene-acrylic acid copolymer, styrene-α-methylstyrene-acrylic acid-acrylic ester copolymer, styrene-maleic acid copolymer, styrene-maleic anhydride copolymer, vinyl naphthalene-acrylic acid copolymer, vinyl naphthalene-maleic acid copolymer, vinyl acetate-maleic acid ester copolymer, vinyl acetate-crotonic acid copolymer, vinyl acetate-acrylic acid copolymer, and their salts. Among those preferred are copolymers of a monomer having a hydrophobic functional group and a monomer having a hydrophilic functional group, and polymers formed of a monomer having both a hydrophobic functional group and a hydrophilic functional group. If a copolymer is used, the copolymer may be a random copolymer, a block copolymer, an alternating copolymer, or a graft copolymer.

The above-mentioned salts used as the resin dispersant may be formed with a basic compound, such as ammonia, ethylamine, diethylamine, triethylamine, propylamine, isopropylamine, dipropylamine, butylamine, isobutylamine, diethanolamine, triethanolamine, triisopropanolamine, aminomethylpropanol, or morpholine. The amount of the basic compound added is not limited as long as it is equal to or more than the neutralization equivalent of the resin dispersant.

Preferably, the resin dispersant has a molecular weight (weight average molecular weight) in the range of 1,000 to 100,000, more preferably in the range of 3,000 to 10,000. A resin dispersant having a molecular weight in the above range allows the coloring agent to be stably dispersed in water, and facilitates the control of viscosity of the resulting aqueous ink composition.

Preferably, the resin dispersant has an acid value in the range of 50 to 300, more preferably in the range of 70 to 150. A resin dispersant having an acid value in the above range ensures that the coloring agent is stably dispersed in water, and printed matter produced by printing with an aqueous ink composition containing such a resin dispersant has high water resistance.

The resin dispersant may be a commercially available product. Examples of the commercially available resin dispersant include JONCRYL 67 (weight average molecular weight: 12,500, acid value: 213), JONCRYL 678 (weight average molecular weight: 8,500, acid value: 215), JONCRYL 586 (weight average molecular weight: 4,600, acid value: 108), JONCRYL 611 (weight average molecular weight: 8,100, acid value: 53), JONCRYL 680 (weight average molecular weight: 4,900, acid value: 215), JONCRYL 682 (weight average molecular weight: 1,700, acid value: 238), JONCRYL 683 (weight average molecular weight: 8,000, acid value: 160), and JONCRYL 690 (weight average molecular weight: 16,500, acid value: 240), which are all produced by BASF Japan.

Examples of the surfactant used for dispersing the pigment include anionic surfactants, such as alkane sulfonates, α-olefin sulfonates, alkylbenzene sulfonates, alkylnaphthalene sulfonates, acylmethyl taurine salts, dialkyl sulfosuccinates, alkyl sulfates, sulfated olefins, polyoxyethylene alkyl ether sulfates, alkylphosphates, polyoxyethylene alkyl ether phosphates and monoglyceride phosphates; amphoteric surfactants, such as alkylpyridium salts, alkylamino salts and alkyldimethylbetaine; and nonionic surfactants, such as polyoxyethylene alkyl ethers, polyoxyethylene alkylphenyl ethers, polyoxyethylene alkyl esters, polyoxyethylene alkyl amides, glycerol alkyl esters and sorbitan alkyl esters.

Preferably, 1 to 100 parts by mass, more preferably 5 to 50 parts by mass, of the resin dispersant or surfactant is added to 100 parts by mass of pigment. Such an amount of resin dispersant or surfactant ensures that the pigment is stably dispersed in water.

The surface-treated pigment may have a hydrophilic functional group, such as -OM, -COOM, -CO-, -SO₃M, -SO₂NH₂,-RSO₂M, -PO₃HM, -PO₃M₂, -SO₂NHCOR, -NH₃, or -NR₃ (in the formula, M represents hydrogen, an alkali metal, ammonium or an organic ammonium, and R represents an alkyl group having a carbon number of 1 to 12, a substituted or unsubstituted phenyl group, or a substituted or unsubstituted naphthyl group). These functional groups can be physically or chemically introduced by being grafted onto the surfaces of the pigment particles directly or with a multivalent group therebetween. The multivalent group used between the pigment particles and the functional group to be introduced may be an alkylene group having a carbon number of 1 to 12, a substituted or unsubstituted phenylene group, or a substituted or unsubstituted naphthylene group.

Preferably, the surface of the surface-treated pigment has been treated with an agent containing sulfur so that -SO₃M and/or -RSO₂M (M represents a counterion, such as hydrogen, alkali metal, ammonium or organic ammonium) can be chemically bonded to the surfaces of the pigment particles. More specifically, for preparing such a surface-treated pigment, a pigment is dispersed in a solvent that has no active proton and is nonreactive to sulfonic acid, and that does not dissolve or easily dissolve the pigment. Subsequently, the surfaces of the pigment particles are treated with a complex of amidosulfonic acid or sulfur trioxide and a tertiary amine so that -SO₃M and/or -RSO₂M can be chemically bonded to the surfaces of the pigment particles. The surface-treated pigment may be thus prepared so as to be dispersed and/or dissolved in water.

For grafting a functional group or its salt onto the surfaces of the pigment particles directly or with a multivalent group therebetween, various known methods can be applied. For example, a commercially available oxidized carbon black may further be oxidized with ozone or a sodium hypochlorite solution so that the surfaces of the carbon black are more hydrophilic, as disclosed in, for example, JP-A-7-258578, JP-A-8-3498, JP-A-10-120958, JP-A-10-195331 and JP-A-10-237349. A carbon black may be treated with 3-amino-N-alkyl substituted pyridium bromide, as disclosed in, for example, JP-A-10-195360 and JP-A-10-330665. An organic pigment may be dispersed in a solvent not dissolving or easily dissolving the organic pigment, and the sulfone group is introduced into the surfaces of the pigment particles with a sulfonating agent, as disclosed in, for example, JP-A-8-283596, JP-A-10-110110 and JP-A-10-110111. An organic pigment may be dispersed in a basic solvent that can form a complex with sulfur trioxide, and sulfur trioxide is added to the dispersion to introduce the sulfone group or sulfoneamino group to the surfaces of the organic pigment particles, as disclosed in, for example, JP-A-10-110114. Any technique can be applied to prepare the surface-treated pigment without being limited to the above methods.

One type or a plurality of types of functional group may be grafted onto the particles of the pigment. What type of and how much the functional group is grafted can be appropriately selected according to the dispersion stability, the color density and the drying properties at the front of the ink jet head, of the resulting ink composition.

For preparing a pigment dispersion, a pigment, water and a resin dispersant (for a resin-dispersed pigment dispersion), a pigment, water and a surfactant (for a surfactant-dispersed pigment dispersion), or a surface-treated pigment and water (for a surface-treated pigment dispersion) are mixed and dispersed by a known disperser, such as ball mill, sand mill, attritor, roll mill, agitator mill, Henschel mixer, colloid mill, ultrasonic homogenizer, jet mill or angmill. If necessary, a water-soluble organic solvent, a neutralizer and other additives may further be added. Preferably, the dispersion is continued until the average particle size of the pigment is reduced to the range of 20 to 500 nm, more preferably to the range of 50 to 200 nm, from the viewpoint of ensuring that the pigment is stably dispersed in water.

### 1. 1. 2 Resin component

The aqueous ink composition used in the printing method of an embodiment of the invention contains a water-soluble and/or a water-insoluble resin component. The resin component solidifies the ink in a second step described later, and tightly fixes the solidified ink to the recording medium. The resin component may be dissolved or dispersed in the aqueous ink composition. If dissolved, the resin dispersant used in the resin-dispersed pigment dispersion can be used as the resin component. If dispersed, or not dissolved in the solvent of the aqueous ink composition, the resin component may be dispersed in a state of fine particles (in an emulsion or a suspension).

Examples of the resin component includes polyacrylic esters and their copolymers; polymethacrylic esters and their copolymers; polyacrylonitriles and their copolymers; polycyanoacrylate, polyacrylamide, polyacrylic acid, polymethacrylic cid, polyethylene, polypropylene, polybutene, polyisobutylene, polystyrene and their copolymers; petroleum resin; chromane-indene resin; terpene resin; polyvinyl acetates and their copolymers; polyvinyl alcohol; polyvinyl acetal; polyvinyl ether; polyvinyl chlorides and their copolymers; polyvinylidene chloride; fluorocarbon polymer; fluorine rubber; polyvinyl carbazole; polyvinyl pyrrolidones and their copolymers; polyvinyl pyridine; polyvinyl imidazole; polybutadienes and their copolymers; polychloroprene; polyisoprene; and natural resins. Preferably, the resin component has both a hydrophobic portion and a hydrophilic portion.

The resin component may be used in a form of fine particles. In order to obtain a resin component in a form of fine particles, any of the following methods can be applied. Some of the methods may be combined if necessary. A polymerization catalyst (polymerization initiator) and a dispersant may be mixed to a monomer of a desired resin component to polymerize (emulsion polymerization). A resin component having a hydrophilic portion may be dissolved in a water-soluble organic solvent, and after mixing the solution with water, the water-soluble organic solvent is removed by vaporization. A resin component may be dissolved in a water-insoluble organic solvent, and the solution and a dispersant are mixed in water. These methods can be appropriately selected according to the type and the properties of the resin component to be used. Examples of the dispersant used for dispersing the resin component include, but not limited to, anionic surfactants, such as sodium dodecylbenzenesulfonate, sodium lauryl phosphate and polyoxyethylene alkyl ether ammonium sulfate; and nonionic surfactants, such as polyoxyethylene alkyl ether, polyoxyethylene alkyl ester, polyoxyethylene sorbitan fatty acid ester and polyoxyethylene alkylphenyl ether. These dispersants may be used singly or in combination.

The resin component in a form of fine particles (in an emulsion or suspension state) may be prepared from a known material by a known method. For example, emulsions or suspensions disclosed in JP-B-62-1426, or JP-A-3-56573, JP-A-3-79678, JP-A-3-160068 or 4-18462 may be used. Commercially available resin emulsions or suspensions may be used, such as Micro Gel E-1002 and Micro Gel E-5002 (produced by Nippon Paint), VONCOAT 4001 and VONCOAT 5454 (produced by DIC), SAE 1014 (produced by Nippon Zeon), Saivinol SK-200 (produced by Saiden Chemical Industry), and JONCRYL 7100, JONCRYL 390, JONCRYL 711, JONCRYL 511, JONCRYL 7001, JONCRYL 632, JONCRYL 741, JONCRYL 450, JONCRYL 840, JONCRYL 74J, JONCRYL HRC-1645J, JONCRYL 734, JONCRYL 852, JONCRYL 7600, JONCRYL 775, JONCRYL 537J, JONCRYL 1535, JONCRYL PDX-7630A, JONCRYL 352J, JONCRYL 352D, JONCRYL PDX-7145, JONCRYL 538J, JONCRYL 7640, JONCRYL 7641, JONCRYL 631, JONCRYL 790, JONCRYL 780 and JONCRYL 7610 (produced by BASF Japan).

Preferably, the resin component in a form of fine particles has an average particle size in the range of 5 to 400 nm, more preferably in the range of 50 to 200 nm, from the viewpoint of ensuring the storage stability and the ejection stability of the aqueous ink composition.

Preferably, the content of the resin component is 0.1% to 15% by mass, more preferably 0.5% to 10% by mass, in the solid content of the aqueous ink composition. Such a content of the resin component allows the aqueous ink composition to be solidified and fixed to an ink-non-absorbent or ink-low-absorbent recording medium. If the resin component content is less than 0.1% by mass, the ink composition cannot sufficiently be solidified or fixed, and consequently, the ink can be separated from the surface of the recording medium. If the content is more than 15% by mass, in contrast, the aqueous ink composition may not be stably stored or stably ejected.

### 1. 1. 3 Silicone surfactant

The aqueous ink composition used in the printing method of an embodiment of the invention contains a silicone surfactant. The silicone surfactant helps the ink composition spread uniformly over the recording medium, and thus prevents non-uniformity in ink density and ink bleeding. Preferably, the silicone surfactant content in the aqueous ink composition is 0.1% to 1.5% by mass. If the silicone surfactant content is less than 0.1% by mass, it is not easy for the ink composition to spread uniformly over the recording medium. Consequently, the resulting image formed by the ink composition tends to exhibit non-uniform ink density and ink bleeding. If the silicone surfactant content is more than 1.5% by mass, in contrast, the aqueous ink composition may not be stably stored or stably ejected.

Preferably, the silicone surfactant is a polysiloxane compound. For example, polyether-modified organosiloxane may be used. More specifically, preferred silicone surfactants include BYK-306, BYK-307, BYK-333, BYK-341, BYK-345, BYK-346 and BYK-348 (produced by BYK), and KF-351A, KF-352A, KF-353, KF-354L, KF-355A, KF-615A, KF-945, KF-640, KF-642, KF-643, KF-6020, X-22-4515, KF-6011, KF-6012, KF-6015 and KF-6017 (produced by Shin-Etsu Chemical).

### 1. 1. 4 Acetylene glycol-based surfactant

The aqueous ink composition used in the printing method of an embodiment of the invention contains an acetylene glycol-based surfactant. Acetylene glycol-based surfactants are superior to the other surfactants in the ability of appropriately controlling the surface tension and the interface tension, and have the property of hardly foaming. Accordingly, the aqueous ink composition containing an acetylene glycol-based surfactant can appropriately control the surface tension and the interface tension between the ink and the printer member coming into contact with the ink, such as the surface of the head nozzle. By use of such an aqueous ink composition in an ink jet recording method, the ejection stability can be enhanced. The aqueous ink composition containing an acetylene glycol-based surfactant has superior wettability and permeability to the recording medium, and accordingly can form highly fine images not exhibiting non-uniform ink density or ink bleeding. Preferably, the acetylene glycol-based surfactant content in the aqueous ink composition is 0.1% to 1.0% by mass. If the acetylene glycol-based surfactant content is less than 0.1% by mass, it is not easy for the ink composition to spread uniformly over the recording medium. Consequently, the resulting image formed by the ink composition tends to exhibit non-uniform ink density and ink bleeding. If the acetylene glycol-based surfactant content is more than 1.0% by mass, in contrast, the aqueous ink composition may not be stably stored or stably ejected.

Examples of the acetylene glycol-based surfactant include SURFYNOLs 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG and GA (produced by Air Products and Chemicals), OLFINEs B, Y, P, A, STG, SPC, E1004, E1010, PD-001, PD-002W, PD-003, PD-004, EXP. 4001, EXP. 4036, EXP. 4051, AF-103, AF-104, AK-02, SK-14 and AE-3 (produced by Nissin Chemical Industry), and ACETYLENOLs E00, EOOP, E40 and E100 (produced by Kawaken Fine Chemical).

### 1. 1. 5 Pyrrolidone or a derivative thereof

The aqueous ink composition used in the printing method of an embodiment of the invention contains a pyrrolidone or a derivative thereof. The pyrrolidone or derivative thereof serves as a suitable dissolving agent or softening agent of the resin component or the surface of the ink-non-absorbent or ink-low-absorbent recording medium on which the ink is fixed. The pyrrolidone or derivative thereof also helps the resin component form a coating while the ink dries, and thus accelerates the solidification and fixation of the ink composition on the ink-non-absorbent or ink-low-absorbent recording medium. Preferably, the pyrrolidone or derivative thereof is contained in the aqueous ink composition in an amount of 1% to 8% by mass. If the content of the pyrrolidone or derivative thereof is less than 1% by mass, the resin component in the aqueous ink composition may not form a good coating, and thus may result in a failure in solidification and fixation of the ink. If the content of the pyrrolidone or derivative thereof is more than 8% by mass, in contrast, the pyrrolidone or derivative thereof cannot sufficiently be vaporized even after a second step (drying) of the printing method, described later, and consequently, the resulting printed matter may not be sufficiently dried. In addition, its odor may be a problem.

Examples of the pyrrolidone derivative include N-alkyl-2-pyrrolidones and N-alkenyl-2-pyrrolidones, where the alkyl group may be a straight or branched chain C₁-C₆ alkyl group and the alkenyl group may be a straight or branched chain C₂-C₆ alkenyl group specific examples of the pyrrolidone or derivative thereof include N-methyl-2-pyrrolidone, N-ethyl-2-pyrrolidone, N-vinyl-2-pyrrolidone, 2-pyrrolidone, N-butyl-2-pyrrolidone, and 5-methyl-2-pyrrolidone. Among these, preferred is 2-pyrrolidone from the viewpoint of ensuring that the aqueous ink composition is stably stored, helping the resin composition form a coating, and having relatively low odor.

### 1. 1. 6 1,2-alkyldiol

The aqueous ink composition used in the printing method of an embodiment of the invention contains a 1,2-alkyldiol. Cooperating with the silicone surfactant and the acetylene glycol-based surfactant, the 1,2-alkyldiol further enhances the wettability of the aqueous ink composition to the recording medium so that the ink can more uniformly spread. By adding a 1,2-alkyldiol to the aqueous ink composition, the ink is prevented from bleeding, and from exhibiting non-uniform density. Preferably, the 1,2-alkyldiol content in the aqueous ink composition is 1% to 8% by mass. If the 1,2-alkyldiol content is less than 1% by mass, the wettability of the aqueous ink composition to the recording medium may be degraded to cause non-uniformity in ink density or ink bleeding in the resulting printed matter. If the 1,2-alkyldiol content is more than 8% by mass, in contrast, the 1,2-alkyldiol cannot sufficiently be vaporized even after a second step (drying) of the printing method, described later, and consequently, the resulting printed matter may not be sufficiently dried. In addition, its odor may be a problem.

Preferably, the sum of the pyrrolidone derivative content and the 1,2-alkyldiol content in the aqueous ink composition is 10% by mass or less. If the sum of their contents is more than 10% by mass, the pyrrolidone derivative and the 1,2-alkyldiol cannot be sufficiently vaporized even by the below-described second step (drying), and consequently, the resulting printed matter may not be sufficiently dried. In addition, their odor may be a problem.

The 1,2-alkyldiol may have a carbon number of 4 to 8, such as butanediol, pentanediol, hexanediol, heptanediol or octanediol. Preferably, the alkyldiol has a carbon number of 6 to 8, such as 1,2-hexanediol, 1,2-heptanediol or 1,2-octanediol. If the carbon number is less than 4, the wettability to the recording medium may be degraded to cause non-uniformity in ink density or ink bleeding in the resulting printed matter. If the carbon number in more than 8, in contrast, the solubility in water may be reduced, so that a desired amount of 1,2-alkyldiol cannot be added, or the storage stability of the ink may be degraded.

### 1. 1. 7 Polyhydric alcohol

The aqueous ink composition used in the printing method of an embodiment of the invention contains a polyhydric alcohol. Polyhydric alcohols can suppress the ink from drying to solidify at the nozzle surface of the ink jet head to prevent clogging and ejection failure. Preferably, the polyhydric alcohol has a high vapor pressure. This is because it is preferable that the polyhydric alcohol can be vaporized together with water in the below-described step of drying the aqueous ink composition. Preferably, the polyhydric alcohol content in the aqueous ink composition is in the range of 2% to 20% by mass. By adding a polyhydric alcohol in this range, the above-described effects can be produced. If the polyhydric alcohol content is less than 2%, the above-described effects may not be produced. If the polyhydric alcohol content is more than 20% by mass, in contrast, the polyhydric alcohol cannot be sufficiently vaporized even after the below-described second step (drying), and consequently, the resulting printed matter may not be sufficiently dried. In addition, the odor may be a problem.

Examples of the polyhydric alcohol include ethylene glycol, diethylene glycol, triethylene glycol, propylene glycol, dipropylene glycol, 1,3-propanediol and 1,4-butanediol. Among those, preferred are ethylene glycol, diethylene glycol, triethylene glycol, propylene glycol and dipropylene glycol. These polyhydric alcohols have high vapor pressures and do not hinder the aqueous ink composition from drying after being printed.

### 1. 1. 8 Water

The aqueous ink composition used in the printing method of an embodiment of the invention contains water. The water acts as the medium or matrix of the aqueous ink composition, and is vaporized in the below-described drying step.

Preferably, the water is pure water or ultra pure water such as ion exchanged water, ultrafiltered water, reverse osmosis water or distilled water, and ionic impurities are removed from the water as much as possible. Preferably, sterile water prepared by, for example, UV irradiation or addition of hydrogen peroxide is used. The use of sterile water can prevent the occurrence of mold or bacteria in the pigment dispersion or the aqueous ink composition for a long term.

### 1. 1. 9 Other additives

The aqueous ink composition used in the printing method of an embodiment of the invention essentially contains the above-described coloring agent, resin component, silicone surfactant, acetylene glycol-based surfactant, pyrrolidone derivative, 1,2-alkyldiol, and water. Such a composition does not release any odor during printing, and can produce printed matter not having non-uniform density or ink bleeding even on a plastic film. In order to further enhance these characteristic features, other additives may be added, such as a penetrating solvent, a moisturizing agent, a preservative or fungicide, a pH adjuster and a chelating agent.

The penetrating solvent enhances the wettability of the aqueous ink composition to the recording medium so that the ink composition can be uniformly applied. Consequently, non-uniformity in ink density and ink bleeding can further be reduced in the resulting image. The penetrating solvent may be, for example, a glycol ether or a monohydric alcohol.

Exemplary glycol ethers include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n-butyl ether, and dipropylene glycol mono-iso-propyl ether.

The monohydric alcohol may be soluble in water. Exemplary water-soluble monohydric alcohols include methanol, ethanol, n-propyl alcohol, iso-propyl alcohol, 2,2-dimethyl-1-propanol, n-butanol, 2-butanol, tert-butanol, iso-butanol, 2-methyl-l-butanol, 3-methyl-1-butanol, 3-methyl-2-butanol, n-pentanol, 2-pentanol, 3-pentanol, and tert-pentanol.

Preferably, the penetrating solvent content in the aqueous ink composition is 10% by mass or less, more preferably 8% by mass or less.

The moisturizing agent suppresses the water in the aqueous ink composition from vaporizing to prevent the aggregation and precipitation of the solid contents in the ink composition, such as pigment and resin component. Examples of the moisturizing agent include glycerol, tetraethylene glycol, polyethylene glycol, polypropylene glycol, 1,5-pentanediol, 2,3-butanediol, 2-methyl-2,4-pentanediol, 2-ethyl-1,3-hexanediol, 1,2,6-hexanetriol, pentaerythritol, 1,6-hexanediol, 1,8-octanediol, 2,2-dimethyl-1,3-propanediol, 2,2-diethyl-1,3-propane diol, trimethylolethane, trimethylolpropane, urea, 2-imidazolidinone, thiourea, and 1,3-dimethyl-2-imidazolidinone.

Preferably, the moisturizing agent content in the aqueous ink composition is less than 10% by mass, more preferably 5% by mass or less. If the moisturizing agent content is more than 10% by mass or more, the drying speed of the ink composition may become too low, and the resin component may be hindered from forming a coating. Thus, the ink composition may be hindered from being solidified and fixed onto the recording medium and result in separation.

Examples of the pH adjuster include potassium dihydrogenphosphate, sodium dihydrogenphosphate, sodium hydroxide, lithium hydroxide, potassium hydroxide, ammonia, diethanolamine, triethanolamine, triisopropanolamine, potassium carbonate, sodium carbonate, and sodium hydrogencarbonate.

Examples of the preservative/fungicide include sodium benzoate, sodium pentachlorophenol, sodium 2-pyridinethiol-1-oxide, sodium sorbate, sodium dehydroacetate, and 1,2-dibenzothiazoline-3-one. Commercially available preservative/fungicides include Proxel XL2 and Proxel GXL (produced by Avecia) and Denicide CSA and NS-500W (produced by Nagase Chemtex).

A rust preventive may also be added, such as benzotriazole.

Examples of the chelating agent include ethylenediaminetetraacetic acid and its salts, such as sodium dihydrogen ethylenediamine.

### 1. 1. 10 Properties of aqueous ink composition

Preferably, the aqueous ink composition is neutral or alkaline, and more preferably has a pH in the range of 7.0 to 10.0. An acid aqueous ink composition may be inferior in storage stability or dispersion stability. In addition, the acid ink composition is likely to corrode metal portions of the ink flow channel in the ink jet recording apparatus. The pH of the aqueous ink composition can be adjusted to be neutral or alkaline with the above-cited pH adjusters.

Preferably, the aqueous ink composition has a viscosity in the range of 1.5 to 15 mPa·s at 20°C. The ink composition having a viscosity in this range can be stably ejected in a first step described later.

Preferably, the surface tension of the aqueous ink composition is 20 mN/m or more and less than 40 mN/m at 25°C, more preferably in the range of 25 to 35 mN/m. The ink composition having a surface tension in these ranges can be stably ejected in the below-described first step, and can exhibit appropriate wettability to ink-non-absorbent or ink-low-absorbent recording media.

### 1. 1. 11 Preparation of aqueous ink composition

The aqueous ink composition used in the printing method of an embodiment of the invention can be prepared by mixing the above-described materials in an arbitrary order and optionally removing impurities by, for example, filtration. Preferably, the coloring agent is previously dispersed in an aqueous medium from the viewpoint of easy handling.

For mixing the materials, preferably, the materials are added one after another into a container equipped with a stirrer, such as a mechanical stirrer or a magnetic stirrer, and mixed together. Filtration may be performed as required by, for example, centrifugal filtration or using a filter paper.

### 1. 2 Printing method

The printing method using an ink jet recording technique according to an embodiment of the invention will now be described.

### 1. 2. 1 First step

In a first step of the printing method according to an embodiment of the invention, droplets of the above-described aqueous ink composition are ejected onto an ink-non-absorbent or ink-low-absorbent recording medium to form an image by an ink jet recording technique.

Any technique can be applied as the ink jet recording method as long as droplets of the aqueous ink composition are deposited on a recording medium by ejecting the ink composition from a fine nozzle. Exemplary ink jet recording methods include the following four techniques:

A first technique is electrostatic suction. In this technique, a strong electric field is applied between the nozzle and an acceleration electrode disposed in front of the nozzle. Droplets of an ink are continuously ejected from the nozzle, and a printing information signal is applied to deflecting electrodes for recording while the ink droplets fly between the deflecting electrodes, or ink droplets may be ejected according to printing information without deflecting the ink droplets.

A second technique is a method for forcibly ejecting ink droplets by applying a pressure to the ink with a small pump, and thus mechanically vibrating the nozzle with a quartz resonator. The ejected ink droplets are charged simultaneously with the ejection of the ink, and recording is performed by applying printing information to the deflecting electrodes while the ink droplets fly between the deflecting electrodes.

A third technique uses a piezoelectric element. A pressure and printing information are simultaneously applied to the ink with a piezoelectric element, thereby ejecting ink droplets for recording.

In another technique, the volume of the ink may be rapidly expanded by thermal energy. The ink is bubbled by heating with a small electrode according to the printing information, and is thus ejected for recording.

The recording medium is ink-non-absorbent or ink-low-absorbent. The ink-non-absorbent recording medium may be a plastic film not surface-treated for ink jet printing (not having an ink-absorbent layer) or a plastic-coated paper or any other substrate. Paper or other substrates to which a plastic film is bonded may be used. The plastic mentioned herein may be, for example, polyvinyl chloride, polyethylene terephthalate, polycarbonate, polystyrene, polyurethane, polyethylene, or polypropylene. The ink-low-absorbent recording medium may be art paper, coated paper, or matte paper.

The ink-non-absorbent and ink-low-absorbent recording media used herein refer to recording media exhibiting a water absorption of 10 mL/m² or less for a period of 30 ms^{1/2} from the beginning of contact with water, measured by Bristow's method. Bristow's method is broadly used as a method for measuring liquid absorption for a short time, and Japan Technical Association of the Pulp and Paper Industry (JAPAN TAPPI) has officially adopted this method. Details of this method are specified in Standard No. 51 of "JAPAN TAPPI Kami Pulp Shiken Hou 2000-nen Ban" (JAPAN TAPPI Pulp and Paper Test Methods, edited in 2000).

In the first step, preferably, the print resolution for printing the aqueous ink composition is 360 dpi (dots per inch) or more and the ratio of the ink jet nozzle resolution to the print resolution is in the range of 1 to 2. From the viewpoint of producing high quality images, the print resolution is desirably high as 360 dpi or more. A print resolution of less than 360 dpi may result in irregular image quality. A ratio of the ink jet nozzle resolution to the print resolution in the range of 1 to 2 allows high speed printing.

### 1. 2. 2 Second step

In a second step of the printing method of embodiments of the invention, the aqueous ink composition on the recording medium is dried during and/or after the first step. By performing the second step, the liquid medium (more specifically, water, pyrrolidone derivative, 1,2-alkyldiol, or polyhydric alcohol) contained in the aqueous ink composition deposited on the recording medium is rapidly vaporized to form a coating of the resin component in the aqueous ink composition. Consequently, high-quality images not exhibiting non-uniform density or ink bleeding can be formed in a short time even on an ink-non-absorbent recording medium, such as a plastic film not having an ink absorbable layer, and the coating of the resin component formed by drying the ink composition adheres onto the recording medium to fix the images.

Any technique can be used for performing the second step without particular limitation, as long as it can accelerate the vaporization of the liquid medium in the aqueous ink composition. For example, the recording medium may be heated during and/or after the first step. Air may be blown to the aqueous ink composition on the recording medium after the first step. These techniques may be combined. More specifically, preferred techniques are forcible air heating, heat radiation, electrically conductive heating, high-frequency drying and microwave drying.

If heating is performed in the second step, the heating temperature is not particularly limited as long as the vaporization of the aqueous ink composition is accelerated, and a heating temperature of 40°C or more is effective. Preferably, the heating temperature is 40 to 80°C, more preferably 40 to 60°C. If the heating temperature is higher than 80°C, the recording medium may be undesirably deformed, so that the recording medium is hindered from being transported after the second step, or the recording medium may be undesirably shrunk when it is cooled to room temperature.

The heating time is also not particularly limited as long as the liquid medium in the aqueous ink composition is vaporized and the resin component forms a coating, and it can be appropriately set in view of the type of the liquid medium, the type of resin component, and printing speed.

### 2. Examples

The invention will be further described with reference to Examples. However, it is not limited to the Examples.

### 2. 1 Preparation of aqueous ink composition

### 2. 1. 1 Preparation of pigment dispersion

Aqueous ink compositions used in the examples each contain a water-insoluble pigment as the coloring agent. For adding a pigment to the aqueous ink composition, resin-dispersed pigment dispersions were previously prepared by dispersing a pigment with a resin dispersant.

The pigment dispersion was prepared as below. To 76 parts by mass of ion exchanged water in which 1.5 parts by mass of 30% ammonia solution (neutralizer) was dissolved, 7.5 parts by mass of acrylic acid-acrylic ester copolymer (weight average molecular weight: 25,000, acid value: 180) was added as the resin dispersant and dissolved. Then, 15 parts by mass of any one of the following pigments was added to the resin dispersant solution and dispersed with zirconia beads in a ball mill for 10 hours. Subsequently, the dispersion was filtered by centrifugal separation to remove coarse particles and impurities. The pigment dispersion was adjusted so as to contain 15% by mass of pigment. The pigments used for pigment dispersions were as follows:
C. I. Pigment Black 7 (used in Black pigment dispersion 1);
C. I. Pigment Yellow 74 (used in Yellow pigment dispersion);
C. I. Pigment Red 122 (used in Magenta pigment dispersion);
C. I. Pigment Blue 15:3 (used in Cyan pigment dispersion);
C. I. Pigment Orange 43 (used in Orange pigment dispersion); and
C. I. Pigment Green 36 (used in Green pigment dispersion).

A surface-treated pigment, which was surface-treated so as to be dispersed in water, was also used as the coloring agent of an aqueous ink composition. The surface-treated pigment was dispersed in waster before being added to the aqueous ink composition. For preparing the surface-treated pigment dispersion, the surface of Color Black S170 (produced by Degussa), which is a type of carbon black, was oxidized with sodium hypochlorite so as to be dispersed in water. The resulting surface-treated carbon black was dispersed in ion exchanged water to prepare a dispersion containing 15% by mass of pigment, and thus, Black pigment dispersion 2 was prepared.

### 2. 1. 2 Preparation of aqueous ink composition

Seven color aqueous ink compositions: black 1, black 2, yellow, magenta, cyan, orange and green, were prepared using the pigment dispersions prepared in the above "2. 1. 1 Preparation of pigment dispersion" according to the compositions shown in Table 1. Seven color ink compositions were combined into an ink set, and Ink Sets 1 to 9 were prepared so the ink compositions of each ink set had different compositions from those of the other ink sets. Each aqueous ink composition prepared by stirring the materials shown in Table 1 with a magnetic stirrer for 2 hours in a container, followed by filtering through a membrane filter of 5 µm in pore size to remove impurities and coarse particles. The values in Table 1 are shown on a percent-by-mass basis, and the ion exchanged water was added so that the total of the ink composition came to 100% by mass.

**Table 1**

| Material | Ink set composition | | | | | | | | |
|---|---|---|---|---|---|---|---|---|---|
| | 1 | 2 | 3 | 4 | 5 | 6 | 7 | 8 | 9 |
| Pigment dispersion | 30.00 | 30.00 | 30.00 | 30.00 | 30.00 | 30.00 | 30.00 | 30.00 | 30.00 |
| BYK-348 (silicone surfactant) | 0.50 | 1.50 | 0.30 | 0.80 | 0.10 | 1.00 | - | 1.50 | 0.50 |
| SURFYNOL DF-110D (Acetylene glycol-based surfactant) | 0.30 | 0.10 | 0.50 | 0.20 | 1.00 | 0.30 | - | - | - |
| 50% Styrene-acrylic acid copolymer emulsion dispersion (Resin component) | 4.00 | 4.00 | 4.00 | 4.00 | 4.00 | 4.00 | 4.00 | 4.00 | 8.00 |
| 2-pyrrolidone (Pyrrolidone derivative) | 4.00 | 1.00 | 3.00 | 5.00 | 1.00 | 8.00 | 10.00 | - | 6.00 |
| 1,2-Hexanediol (1,2-alkyldiol) | 4.00 | 1.00 | 5.00 | 5.00 | 8.00 | 1.00 | - | 10.00 | 6.00 |
| Propylene glycol (Polyhydric alcohol) | 10.00 | 12.00 | 10.00 | 8.00 | 10.00 | 10.00 | 10.00 | 10.00 | - |
| Diethylene glycol (polyhydric alcohol) | - | - | - | - | 1.00 | 1.00 | - | - | 4.00 |
| Triethanolamine (pH adjuster) | 0.10 | 0.10 | 0.10 | 0.10 | 0.10 | 0.10 | 0.10 | 0.10 | - |
| Ethylenediaminetetraacetic acid (Chelating agent) | 0.05 | 0.05 | 0.05 | 0.05 | 0.05 | 0.05 | 0.05 | 0.05 | - |
| Benzotriazole (Rust preventive) | 0.02 | 0.02 | 0.02 | 0.02 | 0.02 | 0.02 | 0.02 | 0.02 | - |
| Ion exchanged water | balance | balance | balance | balance | balance | balance | balance | balance | balance |

BYK-348 shown in Table 1, used as a silicone surfactant is a product available from BYK. SURFYNOL DF-110D used as an acetylene glycol-based surfactant is a product available from Nissin Chemical Industry. The ink compositions of Ink Set 9 were prepared according to the compositions disclosed in JP-A-2005-220352.

### 2. 2 Evaluation of printing

### 2. 2. 1 Dying property

A cold lamination film PG-50L produced by Lami Corporation, which is an ink-non-absorbent polyethylene terephthalate film, and OK TOP COAT+ produced by Oji Paper, which is a slightly-gloss-coated ink-low-absorbent paper, were used as recording media.

An ink jet printer PX-G930 (manufactured by Seiko Epson, nozzle resolution: 180 dpi) was used as the ink jet recording printer. PX-G930 has a temperature-variable heater within the paper guide. The drying property was evaluated at room temperature (25°C).

Any one of Ink Sets 1 to 9 was installed in the ink jet printer PX-G930, and printing was performed on the above-described recording media. Printing was performed under conditions in which the print surface was the same as room temperature (25°C) without being heated by the printer heater; the print surface was heated to 40°C by the printer heater; or the print surface was heated to 80°C by the printer heater. A solid print pattern was formed at a resolution of 360 dpi in the lateral direction and 360 dpi in the vertical direction at duties in increments of 10% in the range of 50% to 100%.

The printed matter immediately after printing was dried at any one temperature of 25, 40, 60 and 80°C for 1 minute, optionally with air blown softly or strongly. Soft air blowing was performed in such a manner that air was blown over the surface of the recording medium at a velocity of about 2 to 5 m/s, and strong air blowing was performed at an air velocity of about 6 to 10 m/s over the surface of the recording medium. Then, the printed solid patterns were rubbed with a finger and checked for whether the ink of the pattern was displaced or removed, and the drying property was evaluated according to the duty of the solid patterns whose ink was not displaced or removed. The duty mentioned herein, for a pattern of 360 dpi in lateral direction and 360 dpi in the vertical direction, refers to the percentage of the number of deposited ink dots to the total number of segments of one square inch divided into 360 in the lateral direction and 360 in the vertical direction. More specifically, for example, a duty of 50% means that ink dots were deposited on 64,800 segments (= 129,600 segments x 50%). The evaluation criteria of drying property were as follows:
A: Ink was not displaced or separated even at a duty of 80% or more.
B: Ink was not displaced or separated at a duty of 70% or less.
C: Ink was not displaced or removed at a duty of 60% or less.
D: Ink was displaced or removed at a duty of 60% or less.

Table 2 shows the results of evaluation test performed under the condition where the print surface was the same as room temperature (25°C) without being heated by the printer heater. Table 3 shows the results of evaluation test performed under the condition where the print surface was heated to 40°C by the printer heater. Table 4 shows the results of evaluation test performed under the condition where the print surface was heated to 80°C by the printer heater.

**Table 2**

| Printer heater setting for printing: None, 25°C at print surface | | | | | | | | | | |
|---|---|---|---|---|---|---|---|---|---|---|
| Evaluation conditions | | Ink set composition | | | | | | | | |
| Environmental temperature after printing | Blowing | 1 | 2 | 3 | 4 | 5 | 6 | 7 | 8 | 9 |
| 25°C | No blowing | D | C | C | D | D | D | D | D | D |
| | Soft blowing | C | C | C | C | C | D | D | D | D |
| | Strong blowing | C | B | C | C | C | C | D | D | D |
| 40°C | No blowing | B | A | B | B | B | B | D | C | C |
| | Soft blowing | A | A | B | B | B | B | D | C | C |
| | Strong blowing | A | A | A | A | A | B | B | B | B |
| 60°C | No blowing | A | A | B | B | B | B | D | C | C |
| | Soft blowing | A | A | A | B | B | B | C | B | B |
| | Strong blowing | A | A | A | A | A | A | B | A | A |
| 80°C | No blowing | A | A | A | A | A | B | C | B | B |
| | Soft blowing | A | A | A | A | A | A | B | A | B |
| | Strong blowing | A | A | A | A | A | A | A | A | A |

**Table 3**

| Printer heater setting for printing: 40°C at print surface | | | | | | | | | | |
|---|---|---|---|---|---|---|---|---|---|---|
| Evaluation conditions | | Ink set composition | | | | | | | | |
| Environmental temperature after printing | Blowing | 1 | 2 | 3 | 4 | 5 | 6 | 7 | 8 | 9 |
| 25°C | No blowing | C | C | C | C | C | C | D | D | D |
| | Soft blowing | B | B | B | C | C | C | D | D | D |
| | Strong blowing | B | A | B | B | B | C | C | C | C |
| 40°C | No blowing | B | A | B | B | B | B | D | C | C |
| | Soft blowing | A | A | B | B | B | B | D | C | C |
| | Strong blowing | A | A | A | A | A | B | B | B | B |
| 60°C | No blowing | A | A | B | B | B | B | D | C | C |
| | Soft blowing | A | A | A | B | B | B | C | B | B |
| | Strong blowing | A | A | A | A | A | A | B | A | A |
| 80°C | No blowing | A | A | A | A | A | B | C | B | B |
| | Soft blowing | A | A | A | A | A | A | B | A | B |
| | Strong blowing | A | A | A | A | A | A | A | A | A |

**Table 4**

| Printer heater setting for printing: 80°C at print surface | | | | | | | | | | |
|---|---|---|---|---|---|---|---|---|---|---|
| Evaluation conditions | | Ink set composition | | | | | | | | |
| Environmental temperature after printing | Blowing | 1 | 2 | 3 | 4 | 5 | 6 | 7 | 8 | 9 |
| 25°C | No blowing | B | B | C | C | C | C | D | D | D |
| | Soft blowing | B | B | B | B | B | C | C | D | D |
| | Strong blowing | B | A | B | B | B | B | C | C | C |
| 40°C | No blowing | A | A | B | B | B | B | D | C | C |
| | Soft blowing | A | A | A | B | A | B | C | B | C |
| | Strong blowing | A | A | A | A | A | A | B | B | B |
| 60°C | No blowing | A | A | A | B | B | B | C | B | B |
| | Soft blowing | A | A | A | A | A | A | C | B | B |
| | Strong blowing | A | A | A | A | A | A | B | A | A |
| 80°C | No blowing | A | A | A | A | A | A | B | B | B |
| | Soft blowing | A | A | A | A | A | A | B | A | A |
| | Strong blowing | A | A | A | A | A | A | A | A | A |

As shown in Tables 2, 3 and 4, images formed with Ink Sets 1 to 6 composed of ink compositions satisfying the requirements of the ink composition suitably used in the printing method of an embodiment of the invention were dried with good properties through an appropriate drying step. Even images formed with Ink Sets 1 to 6 were, however, not favorably dried unless performing a suitable drying step. On the other hand, imaged formed with Ink Sets 7 to 9 composed of ink compositions not satisfying the requirements of the aqueous ink composition suitably used in the printing method of an embodiment of the invention were not dried favorably even though they were subjected to an appropriate drying step.

In the evaluation of drying property, the results shown in Tables 2, 3 and 4 were obtained in both the cases using a cold lamination film PG-50L produced by Lami Corporation, which is an ink-non-absorbent polyethylene terephthalate film, and OK TOP COAT+ produced by Oji Paper, which is a slightly gloss-coated ink-low-absorbent paper, as the recording medium.

### 2. 2. 2 Odor during printing

The ink-non-absorbent polyethylene terephthalate cold lamination film PG-50L produced by Lami Corporation was used as the recording medium.

The same ink jet printer PX-G930 (manufactured by Seiko Epson, nozzle resolution: 180 dpi) as used in "2. 2.1 Drying property" was used as the ink jet recording printer. Print patterns were formed in the same manner as in "2. 2. 1 Drying property". The evaluation of odor was performed at room temperature (25°C).

Any one of Ink Sets 1 to 9 was installed in the ink jet printer PX-G930, and printing was performed on the above-described recording medium under condition where the printer heater was set so as to heat the print surface to 40°C. Printing was performed continuously under this condition and the odor released during printing was evaluated. The evaluation criteria of odor were as follows:
A: Hardly smelled.
B: Slightly smelled, but to the extent that no problem would occur.
C: Smelled.
D: Smelled unbearably.

**Table 5**

| Heater setting (Temperature at print surface) | Ink set composition | | | | | | | | |
|---|---|---|---|---|---|---|---|---|---|
| | 1 | 2 | 3 | 4 | 5 | 6 | 7 | 8 | 9 |
| 40°C | A | A | B | B | B | B | C | D | C |

Table 5 shows the evaluation results of odor released during printing. As shown in Table 5, the ink compositions of Ink Sets 1 to 6, satisfying the requirements of the composition suitably used in the printing method of an embodiment of the invention hardly smelled or slightly smelled to the extent that no problem would occur, even by continuous printing. On the other hand, the ink compositions of Ink Sets 7 to 9, not satisfying the requirements of the aqueous ink composition suitably used in the printing method of an embodiment of the invention smelled strongly, and the odors from some of them were unbearable.

### 2. 2. 3 Ink bleeding in printed matter

A cold lamination film PG-50L produced by Lami Corporation, which is an ink-non-absorbent polyethylene terephthalate film, and OK TOP COAT+ produced by Oji Paper, which is a slightly gloss-coated ink-low-absorbent paper, were used as recording media.

An ink jet printer PX-G930 (manufactured by Seiko Epson, nozzle resolution: 180 dpi) was used as the ink jet recording printer. PX-G930 has a temperature-variable heater within the paper guide. The evaluation was performed at room temperature (25°C).

Any one of Ink Sets 1 to 9 was installed in the ink jet printer PX-G930, and printing was performed on the above-described recording media. Printing was performed under conditions controlled by the printer heater where the print surface was the same as room temperature (25°C) without being heated by the printer heater; the print surface was heated to 35°C; the print surface was heated to 40°C; the print surface was heated to 60°C; the print surface was heated to 80°C; and the print surface was heated to 100°C. A print pattern was formed in such a manner that different colors come into contact or overlap with each other at a resolution of 360 dpi in the lateral direction and 360 dpi in the vertical direction at duties in increments of 10% in the range of 50% to 100%. The bleeding in monochromatic images and multicolored images in the printed matters was visually observed. The evaluation criteria of bleeding were as follows:
A: No bleeding was observed even at a duty of 80% or more.
B: No bleeding was observed up to a duty of 70%.
C: No bleeding was observed up to a duty of 60%.
D: Bleeding was observed at a duty of 60%.

**Table 6**

| Heater setting (Temperature at print surface) | Ink set composition | | | | | | | | |
|---|---|---|---|---|---|---|---|---|---|
| | 1 | 2 | 3 | 4 | 5 | 6 | 7 | 8 | 9 |
| 25°C | C | C | B | C | C | C | D | D | D |
| 35°C | B | C | B | C | B | C | D | D | D |
| 40°C | A | B | A | B | B | B | D | C | C |
| 60°C | A | A | A | A | A | A | C | C | C |
| 80°C | A | A | A | A | A | A | C | B | B |
| 100°C | A | A | A | A | A | A | B | B | B |

Table 6 shows the evaluation results of bleeding in the printed matter. As shown in Table 6, Ink Sets 1 to 6 composed of ink compositions satisfying the requirements of the ink composition suitably used in the printing method of an embodiment of the invention produced printed matter not exhibiting ink bleeding through an appropriate drying step. When the heater setting was 35°C or less, some of the ink sets 1 to 6 were evaluated to be C. When the heater setting was 100°C, all of Ink Sets 1 to 6 were evaluated to be A, but recording media were often bent because the temperature applied to the recording media was too high. Consequently, the recording media could not be transported and thus printing was failed. Even though printing was successfully performed, the recording media often bent during cooling to room temperature, and thus desired printed matter was not produced. Ink Sets 7 to 9 composed of ink compositions not satisfying the requirements of the aqueous ink composition suitably used in the printing method of an embodiment of the invention produced printed matter having large bleeding.

In the evaluation of bleeding in the printed matter, the results shown in Table 6 were obtained in both the cases using a cold lamination film PG-50L produced by Lami Corporation, which is an ink-non-absorbent polyethylene terephthalate film, and OK TOP COAT+ produced by Oji Paper, which is a slightly gloss-coated ink-low-absorbent paper, as the recording medium.

### 2. 2. 4 Non-uniformity in ink density in printed matter

A cold lamination film PG-50L produced by Lami Corporation, which is an ink-non-absorbent polyethylene terephthalate film, and OK TOP coat+ produced by Oji Paper, which is a slightly gloss-coated ink-low-absorbent paper, were used as recording media.

An ink jet printer PX-G930 (manufactured by Seiko Epson, nozzle resolution: 180 dpi) was used as the ink jet recording printer. PX-G930 has a temperature-variable heater within the paper guide. The evaluation was performed at room temperature (25°C).

Any one of Ink Sets 1 to 9 was installed in the ink jet printer PX-G930, and printing was performed on the above-described recording media. Printing was performed under conditions controlled by the printer heater where the print surface was the same as room temperature (25°C) without being heated by the printer heater; the print surface was heated to 35°C; the print surface was heated to 40°C; the print surface was heated to 60°C; the print surface was heated to 80°C; and the print surface was heated to 100°C. A print pattern was formed at a resolution of 360 dpi in the lateral direction and 360 dpi in the vertical direction at duties in increments of 10% in the range of 50% to 100%. The non-uniformity in ink density in thus produced printed matter was visually observed. The evaluation criteria of non-uniformity in ink density were as follows:
A: A non-uniform ink density was not observed even at a duty of 80% or more.
B: A non-uniform ink density was not observed up to a duty of 70%.
C: A non-uniform ink density was not observed up to a duty of 60%.
D: A non-uniform ink density was observed even at a duty of 60%.

**Table 7**

| Heater setting (Temperature at print surface) | Ink set composition | | | | | | | | |
|---|---|---|---|---|---|---|---|---|---|
| | 1 | 2 | 3 | 4 | 5 | 6 | 7 | 8 | 9 |
| 25°C | C | C | B | C | C | C | D | D | D |
| 35°C | B | B | B | B | B | B | D | D | D |
| 40°C | A | B | A | A | A | B | C | C | C |
| 60°C | A | A | A | A | A | A | C | C | C |
| 80°C | A | A | A | A | A | A | C | B | B |
| 100°C | A | A | A | A | A | A | B | B | B |

Table 7 shows the evaluation results of non-uniformity in ink density in the printed matter. As shown in Table 7, Ink Sets 1 to 6 composed of ink compositions satisfying the requirements of the ink composition suitably used in the printing method of an embodiment of the invention produced printed matter not having non-uniform ink density through an appropriate drying step. When the heater setting was room temperature (25°C), almost all the ink sets 1 to 6 were evaluated to be C. When the heater setting was 100°C, all of Ink Sets 1 to 6 were evaluated to be A, but recording media were often bent because the temperature applied to the recording media was too high. Consequently, the recording media could not be transported and thus printing was failed. Even though printing was successfully performed, the recording media often bent during cooling to room temperature, and thus desired printed matter was not produced. Ink Sets 7 to 9 composed of ink compositions not satisfying the requirements of the aqueous ink composition suitably used in the printing method of an embodiment of the invention produced printed matter exhibiting large non-uniformity in ink density.

In the evaluation of non-uniformity in ink density in the printed matter, the results shown in Table 7 were obtained in both the cases using a cold lamination film PG-50L produced by Lami Corporation, which is an ink-non-absorbent polyethylene terephthalate film, and OK TOP COAT+ produced by Oji Paper, which is a slightly gloss-coated ink-low-absorbent paper, as the recording medium.

The invention is not limited to the above-described embodiments, and various modifications may be made. For example, the invention includes substantially the same structure as the disclosed embodiment, for example, a structure including the same method and producing the same result or a method having the same intent and producing the same effect. Some elements unessential to the structure of the disclosed embodiment may be replaced. The structure of an embodiment of the invention includes an element producing the same effect or achieving the same object, as the structure of the disclosed embodiment. The invention may include known art in addition to the structure disclosed in the embodiments.

## Claims

1. A printing method comprising: forming an image by ejecting droplets of an aqueous ink composition onto an ink-non-absorbent or ink-low-absorbent recording medium by an ink jet recording technique; and drying the aqueous ink composition on the recording medium during and/or after forming the image, wherein the aqueous ink composition contains a water-insoluble coloring agent, a resin component, a silicone surfactant, an acetylene glycol-based surfactant, pyrrolidone or a derivative thereof, 1,2-alkyldiol, a polyhydric alcohol, and water.

2. The method according to Claim 1, wherein the drying of the aqueous ink composition includes heating the recording medium to a temperature of 40 to 80°C and/or blowing air having a temperature of 40 to 80°C onto the aqueous ink composition on the recording medium.

3. The method according to Claim 1, wherein the forming of the image is performed at a print resolution of 360 dpi or more, and the ratio of the nozzle resolution to the print resolution is in the range of 1 to 2.

4. The method according to Claim 1, wherein the aqueous ink composition has a viscosity of 1.5 to 15 mPa·s at 20°C.

5. The method according to Claim 1, wherein the content of the silicone surfactant in the aqueous ink composition is 0.1% to 1.5% by mass.

6. The method according to Claim 1, wherein the content of the acetylene glycol-based surfactant in the aqueous ink composition is 0.1% to 1.0% by mass.

7. The method according to Claim 1, wherein the content of the pyrrolidone derivative in the aqueous ink composition is 1.0% to 8.0% by mass, the content of the 1,2-alkyldiol in the aqueous ink composition is 1.0% to 8.0% by mass, and the total content of the pyrrolidone derivative and the 1,2-alkyldiol is 10.0% by mass or less.

8. The method according to Claim 1, wherein the pyrrolidone or derivative thereof is 2-pyrrolidone.

9. The method according to Claim 1, wherein the 1,2-alkyldiol includes an alkyl group having a carbon number of 4 to 8.

10. The method according to Claim 1, wherein the polyhydric alcohol is at least one selected from the group consisting of ethylene glycol, diethylene glycol, triethylene glycol, propylene glycol and dipropylene glycol.

## Patentansprüche

1. Druckverfahren das folgendes umfasst:
Ausbilden eines Bildes durch Ausstoßen von Tropfen einer wässrigen Tintenzusammensetzung auf ein Tinte nichtabsorbierendes oder Tinte gering-absorbierendes Aufzeichnungsmedium durch eine Tintenstrahlaufzeichnungstechnik; und
Trocknen der wässrigen Tintenzusammensetzung auf dem Aufzeichnungsmedium während und/oder nach der Ausbildung des Bildes, wobei die wässrige Tintenzusammensetzung ein wasserunlösliches Farbmittel, eine Harzkomponente, ein Silikontensid, ein Acetylenglycol-basiertes Tensid, Pyrrolidon oder ein Derivat davon, 1,2-Alkyldiol, ein Polyhydroxyalkohol und Wasser enthält.

2. Verfahren gemäß Anspruch 1, wobei das Trocknen der wässrigen Tintenzusammensetzung Erwärmen des Aufzeichnungsmediums auf eine Temperatur von 40 bis 80°C und/oder Blasen von Luft mit einer Temperatur von 40 bis 80°C auf die wässrige Tintenzusammensetzung auf dem Aufzeichnungsmedium einschließt.

3. Verfahren gemäß Anspruch 1, wobei das Ausbilden des Bildes mit einer Druckauflösung von 360 dpi oder mehr durchgeführt wird und das Verhältnis der Düsenauflösung zur Druckauflösung im Beriech von 1 bis 2 ist.

4. Verfahren gemäß Anspruch 1, wobei die wässrige Tintenzusammensetzung eine Viskosität von 1,5 bis 15 mPa·s bei 20°C aufweist.

5. Verfahren gemäß Anspruch 1, wobei der Gehalt des Silikontensids in der wässrigen Tintenzusammensetzung 0,1 bis 1,5 Massen% ist.

6. Verfahren gemäß Anspruch 1, wobei der Gehalt des Acetylenglycol-basierten Tensids in der wässrigen Tintenzusammensetzung 0,1 bis 1,0 Massen% ist.

7. Verfahren gemäß Anspruch 1, wobei der Gehalt des Pyrrolidonderivats in der wässrigen Tintenzusammensetzung 1,0 bis 8,0 Massen% ist, der Gehalt des 1,2-Alkyldiols in der wässrigen Tintenzusammensetzung 1,0 bis 8,0 Massen% ist, und der Gesamtgehalt des Pyrrolidonderivats und des 1,2-Alkyldiols 10,0 Massen% oder weniger ist.

8. Verfahren gemäß Anspruch 1, wobei das Pyrrolidon oder das Derivat davon 2-Pyrrolidon ist.

9. Verfahren gemäß Anspruch 1, wobei das 1,2-Alkyldiol eine Alkylgruppe einschließt, die eine Kohlenstoffanzahl von 4 bis 8 aufweist.

10. Verfahren gemäß Anspruch 1, wobei der Polyhydroxyalkohol mindestens einer ist, der ausgewählt ist aus Ethylenglycol, Diethylenglycol, Triethylenglycol, Propylenglycol und Dipropylenglycol.

## Revendications

1. Procédé d'impression comprenant le fait de : former une image par éjection de gouttelettes d'une composition d'encre aqueuse sur un support d'enregistrement n'absorbant pas l'encre ou absorbant faiblement l'encre par une technique d'enregistrement à jet d'encre ; et sécher la composition d'encre aqueuse sur le support d'enregistrement pendant et/ou après la formation de l'image, où la composition d'encre aqueuse contient un agent colorant insoluble dans l'eau, un composant de résine, un agent tensioactif au silicone, un agent tensioactif à base d'acétylène glycol, du pyrrolidone ou un dérivé de celui-ci, 1,2-alkyldiol, un polyalcool , et de l'eau.

2. Procédé selon la revendication 1, dans lequel le séchage de la composition d'encre aqueuse comporte le fait de chauffer le support d'enregistrement à une température de 40 à 80°C et/ou souffler de l'air ayant une température de 40 à 80°C sur la composition d'encre aqueuse sur le support d'enregistrement.

3. Procédé selon la revendication 1, dans lequel la formation de l'image est réalisée à une résolution d'impression de 360 dpi ou plus, et le rapport de la résolution de la buse par la résolution d'impression est dans la plage de 1 à 2.

4. Procédé selon la revendication 1, dans lequel la composition d'encre aqueuse a une viscosité de 1,5 à 15 mPa.s à 20°C.

5. Procédé selon la revendication 1, dans lequel la teneur de l'agent tensioactif au silicone dans la composition d'encre aqueuse est de 0,1% à 1,5% en masse.

6. Procédé selon la revendication 1, dans lequel la teneur de l'agent tensioactif à base d'acétylène glycol dans la composition d'encre aqueuse est de 0,1% à 1,0% en masse.

7. Procédé selon la revendication 1, dans lequel la teneur du dérivé de pyrrolidone dans la composition d'encre aqueuse est de 1,0% à 8,0% en masse, la teneur du 1,2-alkyldiol dans la composition d'encre aqueuse est de 1,0% à 8,0% en masse, et la teneur totale du dérivé de pyrrolidone et du 1,2-alkyldiol est de 10,0 % en masse ou moins.

8. Procédé selon la revendication 1, dans lequel le pyrrolidone ou un dérivé de celui-ci est le 2-pyrrolidone.

9. Procédé selon la revendication 1, dans lequel le 1,2-alkyldiol comprend un groupe alkyle dont le nombre de carbone est de 4 à 8.

10. Procédé selon la revendication 1, dans lequel le polyalcool est au moins un composé sélectionné parmi le groupe constitué d'éthylène glycol, de diéthylène glycol, de triéthylène glycol, de propylène glycol et de dipropylène glycol.
